# EUROPEAN PATENT APPLICATION

(11) **EP 2 642 680 A1**
(43) Date of publication of application: **25.09.2013**
(21) Application number: 12360020.7
(22) Date of filing: 19.03.2012
(51) Int. Cl.: H04L 1/06, H04B 7/04, H04B 7/06

(54) **Network signalling**

(71) Applicant: Alcatel Lucent, 75007 Paris (FR)
(72) Inventor: Wong, Shin Horng, Chippenham Wiltshire SN15 3YB (GB); Baker, Matthew P.J., Canterbury Kent CT2 9DB (GB)
(74) Representative: Sarup, David Alexander

(57) **Abstract**

A method of providing uplink control channel information on a communication link between user equipment and a base station in a wireless communication network operating in a Multiple Input Multiple Output mode. User equipment and a computer program product operable to perform the method. The communication link comprises a primary stream and at least one secondary stream. The method comprises: encoding primary stream control channel information using a first channelisation code, the primary stream control channel information to be carried on a primary stream control channel on the primary stream; encoding secondary stream control channel information using a second channelisation code; and transmitting the encoded primary and secondary control channel information to the base station.

## Description

### FIELD OF THE INVENTION

The present invention relates to a method of providing uplink control channel information on a communication link between user equipment and a base station in a wireless communication network operating in a Multiple Input Multiple Output mode, a computer program product and user equipment operable to perform that method.

### BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless HSPA telecommunication systems, user equipment can move between geographical base station coverage areas. Service provided to user equipment is overseen by a radio network controller (RNC). The radio network controller communicates with user equipment and base stations and determines which base station, and which cell of the geographical area served by that base station each user equipment is primarily connected to (known as the "serving cell"). Furthermore, a radio network controller acts to control and communicate with a base station and user equipment when user equipment moves from the geographical area served by one base station to a geographical area served by another base station.

Multiple-Input, Multiple-Output (MIMO) techniques may be employed within a communications system to improve data throughput in communications between, for example, a base station and user equipment.

It will be appreciated that a signal transmitted between user equipment and a base station over a radio channel typically experiences many propagation paths, for example, due to reflection, before arriving at a base station receiver. The signals carried on those paths each arrive at a different time, power and phase at the receiver.

Multiple-Input, Multiple-Output (MIMO) techniques include the use of multiple transmission antenna at user equipment. Those antenna are physically separated. A signal may be sent to a base station on one or more of those antenna(s) provided at user equipment. The signals arriving at a base station from two antennas may, assuming the received signals are not too closely correlated, be decoded by the base station and can thus result in an increase in data throughput.

Implementation of MIMO techniques across a network is not without complication.

Accordingly, it is desired to improve the operation of a wireless telecommunications network having MIMO capability.

### SUMMARY

A first aspect provides a method of providing uplink control channel information on a communication link between user equipment and a base station in a wireless communication network operating in a Multiple Input Multiple Output mode, the communication link comprising a primary stream and at least one secondary stream, the method comprising: encoding primary stream control channel information using a first channelisation code, the primary stream control channel information to be carried on a primary stream control channel on the primary stream; encoding secondary stream control channel information using a second channelisation code; and transmitting the encoded primary and secondary control channel information to the base station.

The first aspect recognizes that uplink MIMO is a communication method which can be implemented in a network. According to uplink MIMO techniques, streams of data can be transmitted from user equipment over two or more antennas using the same uplink resource (frequency time and code) and provided those streams may be decoded at a base station, MIMO techniques allow for improved data throughput between user equipment and a base station.

The channel carrying a stream of data from user equipment, typically an E-DCH, comprises one or more E-DCH (E-DCH Dedicated Physical Data Channel) and one E-DPCCH (E-DCH Dedicated Physical Control Channel). The E-DPDCH carries data traffic and the E-DPCCH carries information to allow decoding of the E-DPDCH. If user equipment is MIMO capable and operable to transmit more than one E-DCH, then a secondary E-DCH stream is sent together with the primary E-DCH stream. Similar to the primary E-DCH, the secondary E-DCH will typically comprise one or more secondary E-DPDCH (S-E-DPDCH) and one secondary E-DPCCH (S-E-DPCCH). It will be understood that for each antenna the user equipment is also operable to send a pilot channel; in this instance, primary and secondary pilots respectively are referred to as DPCCH and S-DPCCH.

As is described above, more than one stream of information can be sent using the same time-frequency-code resource in MIMO if the paths taken by the streams are uncorrelated. The streams are likely to experience different gains (ie, have different eigenvalues in a MIMO channel matrix). For an uplink MIMO case with two streams, the primary stream is typically decoded with higher gain than that of the secondary stream. The primary stream might usually therefore contain essential control channels including, for example, downlink feedback information in the form of an HS-DPCCH.

A S-E-DPDCH (secondary data channel) and S-E-DPCCH (secondary control channel) are carried on a secondary stream which typically has a lower gain. The secondary stream shares the same frequency, code and time resources as that of the primary stream and may experience strong interstream interference. It will be thus be understood that the quality of the secondary control channel received by a base station may not be good, as decodable, nor as robust as that of a primary control channel. Ideally, channel structures within a MIMO network would be such that secondary channel control signaling within a network is reliably received in order to aid overall operation of a network.

It will be understood that the first aspect aims to provide a channel structure which provides a robust secondary control channel without increasing signaling overhead in a network, that is to say without using higher transmission power or a lower code rate.

The first aspect recognises that by using a different channelisation code for primary and secondary control channels, interference between those channels carrying the control information can be reduced and the likelihood of both channels being successfully decoded on reaching a base station is increased.

In one embodiment, the secondary stream control channel information is carried on a secondary control channel provided on the secondary stream. Accordingly, the secondary control channel can be used to provide additional pilot energy for the secondary data stream whilst remaining robust and without increasing overall overhead. It will be appreciated that when operating and transmitting a single stream, it is not unusual for pilot energy provided by a pilot signal to be low in comparison to the Dedicated Physical Data Channel energy. Thus, a base station may make use of the physical control channels as additional pilot energy. That is to say, after correct decoding, a base station can reconstruct it and use it to bring the total pilot and E-DPCCH (control channel) energy closer to optimal pilot energy for channel estimation. Channel estimation is important to be able to efficiently decode the primary stream of data carried on the Dedicated Physical Data Channel.

It will thus be understood that if there is no control channel energy carried on the secondary stream in a MIMO scenario, the effective pilot energy available on the secondary stream is limited to that only of the pilot channel, and that energy may be sub-optimal (insufficient) to be used when trying to decode a data stream carried on the Dedicated Physical Data Channel on the secondary carrier.

Furthermore, a feedback channel (for example, E-DPCCH) is usually boosted (transmitted at a higher power) if the Dedicated Physical Data Channel is operable to support transmissions having a very large transport block size. If the control channel is used as a pilot as previously described, it provides a more accurate channel estimation mechanism to a base station. That can be particularly important if the transport blocks are large.

In order to achieve the same level of pilot quality in a secondary stream, additional pilot energy may also be needed when the transport block sizes on the secondary Dedicated Physical Data Stream are large.

According to one embodiment, the second channelisation code is unused by any other channel of the transmission link. In some embodiments, the channelization code used on the secondary stream for the secondary control channel information (S-E-DPCCH) is different to any channelization code used for any physical channel on the primary stream, thereby avoiding strong inter-stream interference.

According to one embodiment, the primary and secondary streams are transmitted using identical time, frequency and code uplink resource. More than one stream of information can be sent using the same time-frequency-code resource in MIMO if the paths taken by the streams are uncorrelated. Such an arrangement can lead to a greater overall data throughput.

According to one embodiment, the primary and secondary control channels comprise E-DPCCH channels.

A second aspect provides a computer program product operable, when executed on a computer, to perform the method of the first aspect.

A third aspect provides user equipment operable to provide uplink control channel information on a communication link between user equipment and a base station in a wireless communication network operating in a Multiple Input Multiple Output mode, the communication link comprising a primary stream and at least one secondary stream, the user equipment comprising: primary control channel encoding logic operable to encode primary stream control channel information using a first channelisation code, the primary stream control channel information to be carried on a primary stream control channel on the primary stream; secondary control channel encoding logic operable to encode secondary stream control channel information using a second channelisation code; and transmission logic operable to transmit said encoded primary and secondary control channel information to the base station.

According to one embodiment, the transmission logic is operable to transmit the secondary stream control channel information on a secondary control channel provided on the secondary stream.

According to one embodiment, the secondary control channel encoding logic is operable to choose a second channelisation code which is unused by any other channel of the transmission link.

According to one embodiment, the transmission logic is operable to transmit the primary and secondary streams using identical time, frequency and code uplink resource.

According to one embodiment, the primary and secondary control channels comprise E-DPCCH channels.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates a wireless telecommunications system according to one embodiment;
Figure 2 illustrates schematically typical propagation paths between a transmitter and a receiver; and
Figure 3 illustrates schematically an implementation of uplink MIMO at user equipment.

### DETAILED DESCRIPTION OF THE DRAWINGS

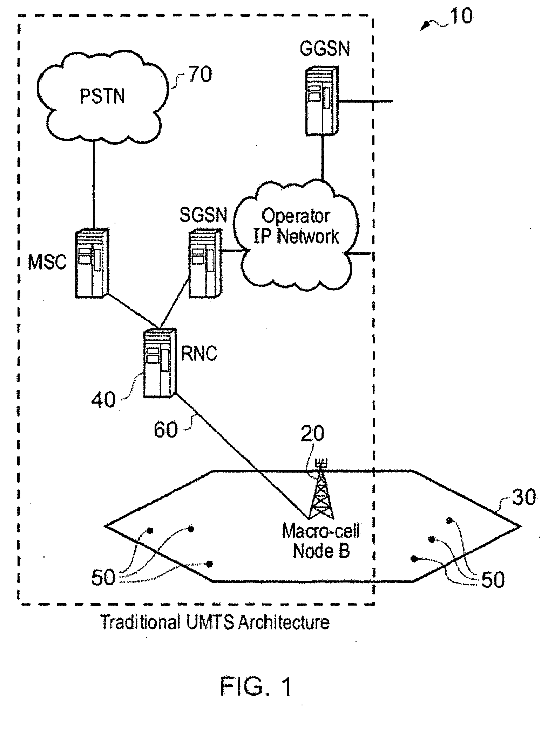

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as, for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

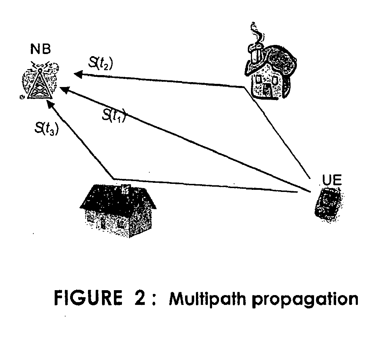

Figure 2 illustrates schematically typical propagation paths between a transmitter, in this case, user equipment 50 and a receiver on a base station 20. A signal transmitted over a radio channel typically experiences many propagation paths, for example, due to reflection, before arriving at a receiver. Those signal paths are represented as *S*(ti), *S*(*t*₂), and *S*(*t*₃) in Figure 2, and each arrive at different time, power and phase at the receiver.

According to uplink MIMO techniques, streams of data can be transmitted from user equipment over two or more antennas using the same uplink resource (frequency time and code) and provided those streams may be decoded at a base station, MIMO techniques allow for improved data throughput between user equipment and a base station.

The channel carrying a stream of data from user equipment, typically an E-DCH, comprises one or more E-DCH (E-DCH Dedicated Physical Data Channel) and one E-DPCCH (E-DCH Dedicated Physical Control Channel). The E-DPDCH carries data traffic and the E-DPCCH carries information to allow decoding of the E-DPDCH. If user equipment is MIMO capable and operable to transmit more than one E-DCH, then a secondary E-DCH stream is sent together with the primary E-DCH stream. Similar to the primary E-DCH, the secondary E-DCH will typically comprise one or more secondary E-DPDCH (S-E-DPDCH) and one secondary E-DPCCH (S-E-DPCCH). It will be understood that for each antenna the user equipment is also operable to send a pilot channel; in this instance, primary and secondary pilots respectively are referred to as DPCCH and S-DPCCH.

As is described above, more than one stream of information can be sent using the same time-frequency-code resource in MIMO if the paths taken by the streams are uncorrelated. The streams are likely to experience different gains (ie, have different eigenvalues in a MIMO channel matrix). For an uplink MIMO case with two streams, the primary stream is typically decoded with higher gain than that of the secondary stream. The primary stream might usually therefore contain essential control channels including, for example, downlink feedback information in the form of an HS-DPCCH.

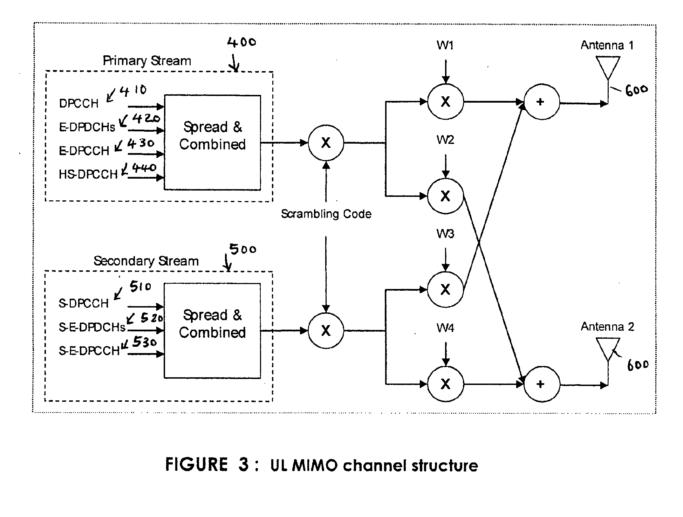

Figure 3 illustrates schematically the typical channel structure for uplink MIMO as implemented at user equipment. In the structure illustrated in Figure 4, user equipment is operable to transmit a primary stream 400 and a secondary stream 500. The primary stream comprises a pilot channel (DPCCH 410), Dedicated Physical Data Channels 420, control channels 430 and a downlink feedback channel 440. The secondary stream 500 comprises a pilot channel 510, Dedicated Physical Data Channels 520 and control channels 530. The weights W1, W2, W3 and W4 are pre-coding weights signaled by a base station to user equipment to ensure effective MIMO transmissions from antenna 600.

More than one stream of information can be sent using the same time frequency and code resource in MIMO if the paths taken by the streams received by a base station are uncorrelated. Streams of data sent by user equipment are likely to experience different gains (that is to say, different Eigen values of a MIMO channel matrix). For an uplink MIMO case operating according to a transmission scenario in which two streams are supported, the primary stream is decoded usually with a higher gain than that of the secondary stream; that is to say, the primary stream is often better received than the secondary stream. As a result, the primary stream is usually selected as the stream which also contains other essential control channels (for example, downlink feedback information).

It will be appreciated that the secondary stream typically carries its own secondary stream control channel information used for decoding a secondary Dedicated Physical Data Channel. That control information carried by the secondary stream in respect of data carried on the secondary stream must also be robust. However, the Dedicated Secondary Physical Data Channel and secondary feedback channel are carried on the secondary stream which typically has a lower gain than the primary stream in a MIMO scenario.

It will also be appreciated that since the secondary stream shares the same frequency, code and time resource as that of the primary stream, a level of strong inter-stream interference is experienced. That inter-stream interference may be tolerable on the primary stream which is stronger, but may be particularly detrimental when it comes to decoding signaling carried on the secondary stream. Thus, typically, the quality of the secondary feedback channel is not as robust as that carried on the primary channel.

Aspects described herein provide a channel structure for implementation in uplink MIMO transmission modes which is typically more robust, particularly in relation to a secondary control channel, and yet does not increase overall overhead; that is to say, without the need to provide a higher transmission power or a lower code rate.

It will be appreciated that one solution would be to simply carry the secondary control information on a primary stream; for example, an S-E-DPCCH could be carried on the primary stream. As a result, the secondary stream control information would benefit from the higher gain typically provided in relation to a primary stream. Such an arrangement is not, however, without problems.

It will be appreciated that when operating and transmitting a single stream, it is not unusual for pilot energy provided by a pilot signal to be low in comparison to the Dedicated Physical Data Channel energy. Thus, a base station may make use of the physical control channels as additional pilot energy. That is to say, after correct decoding, a base station can reconstruct it and use it to bring the total pilot and E-DPCCH (control channel) energy closer to optimal pilot energy for channel estimation. Channel estimation is important to be able to efficiently decode the primary stream of data carried on the Dedicated Physical Data Channel.

It will thus be understood that if there is no control channel energy carried on the secondary stream in a MIMO scenario, the effective pilot energy available on the secondary stream is limited to that only of the pilot channel, and that energy may be sub-optimal (insufficient) to be used when trying to decode a data stream carried on the Dedicated Physical Data Channel on the secondary carrier.

Furthermore, a feedback channel (for example, E-DPCCH) is usually boosted (transmitted at a higher power) if the Dedicated Physical Data Channel is operable to support transmissions having a very large transport block size. If the control channel is used as a pilot as previously described, it provides a more accurate channel estimation mechanism to a base station. That can be particularly important if the transport blocks are large.

In order to achieve the same level of pilot quality in a secondary stream, additional pilot energy may also be needed when the transport block sizes on the secondary Dedicated Physical Data Stream are large. However, that would not be possible in the case where the secondary control channel information is carried on the primary stream, since the pilot cannot be boosted using the control channel energy.

Thus, solutions which transmit the secondary feedback channel on the primary stream may actually lead to a decrease in overall efficient network operation.

Solutions which transmit the secondary feedback channel on the secondary stream typically assume the same channelization code would be used as for the feedback channel on the first stream. Such an arrangement results in strong interference from the primary control channel on the secondary control channel and, thus, there is a general poor robustness in relation to the secondary control channel.

Aspects described herein enable the secondary control channel to be used to provide additional pilot energy for the secondary data stream whilst remaining robust and without increasing overall overhead. In particular, aspects and embodiments described recognize that it is possible to send a secondary control channel (S-E-DPCCH) in the secondary stream, as shown in Figure 3, but rather than use the same channelization code as the primary control channel (E-DPCCH) a different channelization code is used for the secondary control channel information.

In some embodiments, the channelization code used on the secondary stream for the secondary control channel information (S-E-DPCCH) is different to any channelization code used for any physical channel on the primary stream, thereby avoiding strong inter-stream interference.

Aspects allow the secondary control information (S-E-DPCCH) to be used as a boost or enhancement to the secondary pilot, thus enhancing channel estimation on the secondary stream and allowing more efficient demodulation of secondary Dedicated Physical Data Channels. That is to say, aspects allow for robust secondary stream operation without an increase in total overhead.

According to one embodiment, the general uplink channel structure as shown in Figure 3 is used for uplink MIMO operation and the following channelization codes are used for the primary and secondary control channel information:
E-DPCCH = CH_{256,1} (that is to say, spreading factor 256, code 1); and
S-E-DPCCH = CH_{256,126} (that is to say, spreading factor 256, channelization code 126)

As a result, inter-stream interference between primary and secondary control channels (E-DPCCH and S-E-DPCCH) can be avoided, thus improving the signal quality of both control channels as received at a base station. If CH_{256,126} is not used for any physical channels on the primary stream, inter-stream interference may be substantially avoided for the secondary control channel (S-E-DPCCH).

It will be appreciated that any other unused channelization code may be used for transmission of the secondary control channel information.

Aspects avoid inter-stream interference on the secondary control channel and also, in some embodiments, the primary control channel, thus giving improved signal quality on those important control channels and allowing the secondary control channels to be transmitted via a secondary stream which may allow for enhanced secondary stream operation by means of allowing for boosted channel estimation.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of providing uplink control channel information on a communication link between user equipment and a base station in a wireless communication network operating in a Multiple Input Multiple Output mode, said communication link comprising a primary stream and at least one secondary stream, said method comprising:
encoding primary stream control channel information using a first channelisation code,
said primary stream control channel information to be carried on a primary stream control channel on said primary stream;
encoding secondary stream control channel information using a second channelisation code; and
transmitting said encoded primary and secondary control channel information to said base station.

2. A method according to claim 1, wherein said secondary stream control channel information is carried on a secondary control channel provided on said secondary stream.

3. A method according to any preceding claim, wherein said second channelisation code is unused by any other channel of said transmission link.

4. A method according to any preceding claim, wherein said primary and secondary streams are transmitted using identical time, frequency and code uplink resource.

5. A method according to any preceding claim, wherein said primary and secondary control channels comprise E-DPCCH channels.

6. A computer program product operable, when executed on a computer, to perform the method of any one claims 1 to 5.

7. User equipment operable to provide uplink control channel information on a communication link between user equipment and a base station in a wireless communication network operating in a Multiple Input Multiple Output mode, said communication link comprising a primary stream and at least one secondary stream, said user equipment comprising:
primary control channel encoding logic operable to encode primary stream control channel information using a first channelisation code, said primary stream control channel information to be carried on a primary stream control channel on said primary stream;
secondary control channel encoding logic operable to encode secondary stream control channel information using a second channelisation code; and
transmission logic operable to transmit said encoded primary and secondary control channel information to said base station.

8. User equipment according to claim 7, wherein said transmission logic is operable to transmit said secondary stream control channel information on a secondary control channel provided on said secondary stream.

9. User equipment according to claim 7 or 8, wherein said secondary control channel encoding logic is operable to choose a second channelisation code which is unused by any other channel of said transmission link.

10. User equipment according to any one of claims 7 to 9, wherein said transmission logic is operable to transmit said primary and secondary streams using identical time, frequency and code uplink resource.

11. User equipment according to any one of claims 7 to 10, wherein said primary and secondary control channels comprise E-DPCCH channels.
